Europäisches Patentamt

European Patent Office

Office européen des brevets

(19)

(11) Numéro de publication : **0 597 735 A1**

# DEMANDE DE BREVET EUROPEEN

(12)

(21) Numéro de dépôt : 93402274.0

(22) Date de dépôt : 17.09.93

(51) Int. Cl.⁵ : **C04B 28/26,** C09K 17/00, E02D 3/12, // (C04B28/26, 18:14, 22:00, 22:06, 22:10, 40:00)

(30) Priorité : 12.11.92 FR 9213603

(43) Date de publication de la demande : 18.05.94 Bulletin 94/20

(84) Etats contractants désignés : AT BE CH DE DK ES FR GB GR IE IT LI LU NL PT SE

(71) Demandeur : RHONE-POULENC CHIMIE 25, quai Paul Doumer F-92408 Courbevoie Cédex (FR)

(72) Inventeur : **Frouin, Laurent** **2, rue de la Bergère** **F-94240 L'Hay les Roses (FR)** Inventeur : **Pennavaire, Maryse** **100, Avenue du Docteur Rosenfeld** **F-93230 Romainville (FR)**

(74) Mandataire : **Dubruc, Philippe et al** **RHONE-POULENC CHIMIE Direction des Brevets 25, Quai Paul Doumer** **F-92408 Courbevoie Cédex (FR)**

(54) **Procédé de préparation de coulis injectable.**

(57) Procédé de préparation d'un coulis, caractérisé en ce qu'il met en oeuvre une solution de silicate de métal alcalin, un composé hydrosoluble à base de calcium, de l'aluminate de métal alcalin et de l'hydroxyde de métal alcalin.

Mise en oeuvre du coulis susceptible d'être obtenu par ce procédé pour l'étanchéification et/ou la consolidation des sols ou des matériaux de construction par injection.

EP 0 597 735 A1

La présente invention concerne un coulis essentiellement, voire entièrement, minéral, son procédé de préparation; ce procédé pouvant être mis en oeuvre pour l'étanchéification et/ou la consolidation des sols et/ou des matériaux de construction par injection.

Le traitement des sols et/ou des matériaux de construction par injection consiste à remplir des interstices avec des coulis de natures diverses destinés à modifier les caractéristiques du terrain ainsi traité.

Ces modifications portent soit sur l'amélioration des propriétés mécaniques des terrains dans le cas de la consolidation, soit sur la diminution de la perméabilité dans le cas de l'étanchéification. Il est possible également de traiter par injection pour modifier les deux propriétés.

Jusqu'à ces dernières années, l'étanchement et la consolidation des sols ou des matériaux de construction s'effectuaient principalement par injection de coulis organiques. Mais, les produits de synérèse de ces coulis (décomposition des produits chimiques injectés ou formés) occasionnent des pollutions des nappes phréatiques et des eaux de surface.

Ainsi, le soucis majeur, à l'heure actuelle, des spécialistes injecteurs dans le domaine de l'étanchement et/ou de la consolidation des sols est la préservation de la qualité des nappes phréatiques et des eaux de surface telles que cours d'eau et retenues.

Ce soucis a donc conduit à l'utilisation de coulis minéraux.

Afin de chercher à satisfaire techniquement et économiquement les nouvelles contraintes imposées par ces considérations écologiques, de nombreux articles et brevets ont été publiés à ce sujet.

Ainsi, dans le brevet français n° 2.571.734, il est décrit un coulis aqueux injectable pour la consolidation et/ou l'étanchement des sols qui comprend des fines particules de silice amorphe et ces particules de chaux éteinte.

Toutefois, ce coulis présente l'inconvénient d'avoir un temps de prise trop long (d'environ 2 jours).

On a également décrit dans le brevet français n° 2.528.441 un agent d'étanchéification et/ou de consolidation de sols comprenant une solution sodique concentrée de silice spécifique et éventuellement, de la chaux ou un sel de calcium. La silice dissoute réagit avec le calcium pour former des cristaux de silicates de calcium hydratés.

Cependant, ces coulis présentent les inconvénients soit de posséder des propriétés mécaniques peu satisfaisantes, soit d'avoir un temps de prise trop court, incompatible avec l'application souhaitée, soit encore d'être trop visqueux initialement.

Il est donc souhaitable et c'est un des buts de la présente invention de proposer un procédé de préparation d'un coulis permettant de contrôler le temps de prise.

Un autre but de la présente invention est de proposer un coulis présentant, après durcissement, des prooriétés mécaniques satisfaisantes et des caractéristiques non polluantes dans le cas d'une utilisation de ce procédé dans l'étanchéification et/ou la consolidation de sols ou de matériaux de construction.

Ces buts et d'autres sont atteints par la présente invention qui concerne en effet un procédé de préparation d'un coulis, caractérisé en ce qu'il met en oeuvre une solution de silicate de métal alcalin, un composé hydrosoluble à base de calcium, de l'aluminate de métal alcalin et de l'hydroxyde de métal alcalin.

Le procédé selon l'invention présente l'avanatge d'être simle et économique de mise en oeuvre.

Le coulis susceptible d'être obtenu par ce procédé fait également partie de la présente invention.

Le coulis et le procédé de préparation de ce coulis selon l'invention comportent et mettent en oeuvre, comme il l'a été stipulé ci-dessus, un certain nombre d'éléments qui vont maintenant être étudiés plus précisément. Pour tout le reste de la description, tout ce qui est décrit au sujet desdits éléments s'applique tant au coulis qu'au procédé qui utilisent ces éléments.

De préférence, le métal alcalin présent dans les composés mis en oeuvre dans le procédé de la présente invention est le sodium.

Selon l'invention, on peut utiliser comme composé hydrosoluble à base de calcium tout sel de calcium, tel que le chlorure de calcium, du carbonate de calcium, de la chaux ou leur mélange. De manière avantageuse, le composé hydrosoluble à base de calcium est la chaux ou un mélange chaux-carbonate de calcium, le carbonate de calcium étant présent de façon minoritaire en poids.

Dans le cas d'une utilisation du coulis pour l'étanchéification et/ou la consolidation des sols ou des matériaux de construction, la granulométrie de ce composé hydrosoluble à base de calcium est choisie en fonction de la taille des interstices qui existent dans le matériau ou le sol à traiter. De manière pratique, le composé hydrosoluble à base de calcium est de la chaux micronisée, plus particulièrement de la chaux dont le diamètre moyen est compris entre 0,5 et 9 $\mu$m, de préférence entre 1 et 4 $\mu$m.

Selon l'invention, l'aluminate de métal alcalin utilisé peut être soit sous forme de poudre sèche, soit en solution dans l'eau, soit en solution sodique. De préférence, on utilise un aluminate de métal alcalin comprenant de 35 à 45% en poids de $M_2O$ et de 55 à 65% en poids de $Al_2O_3$ (M représentant le métal alcalin).

De manière avantageuse, le procédé met en oeuvre une solution de silicate de métal alcalin de rapport pondéral SiO2/M2O supérieur ou égal à 1,3, de préférence supérieur ou égal à 2. Dans ce qui suit, ce rapport sera nommé Ri.

L'hydroxyde de métal alcalin mis en oeuvre dans le procédé diminue le rapport pondéral SiO2/M2O de la solution de silicate de métal alcalin, M2O représente alors les quantités de métal alcalin présent d'une part dans la solution de métal alcalin et d'autre part dans l'hydroxyde de métal alcalin, le tout étant exprimé en M2O. Ainsi, la quantité d'hydroxyde de métal alcalin mise en oeuvre correspond préférentiellement à la quantité nécessaire pour que le rapport pondéral SiO2/M2O devienne compris entre 0,9 et 1,3, de façon encore plus préférentielle entre 1,05 et 1,15. Dans ce qui suit, ce rapport sera nommé Rf.

La solution de silicate de métal alcalin possède généralement environ 10 à 55% d'extrait sec, de préférence 30 à 50% d'extrait sec.

Selon un mode particulier de réalisation de l'invention, le procédé est caractérisé en ce que l'aluminate de métal alcalin est ajouté à ladite solution de silicate de métal alcalin et que, simultanément ou après cet ajout, on fait réagir la solution de silicate de métal alcalin avec le composé hydrosoluble à base de calcium, l'hydroxyde de métal alcalin étant ajouté après ou, de préférence, en même temps que le composé hydrosoluble à base de calcium. L'effet de retard à la prise du coulis ainsi obtenu en est d'autant plus accentué.

De manière pratique, l'aluminate de métal alcalin, le composé hydrosoluble à base de calcium et l'hydroxyde de métal alcalin sont ajoutés simultanément à la solution de silicate de métal alcalin.

On préfère, selon l'invention, mettre en oeuvre la solution de silicate de métal alcalin et l'aluminate de métal alcalin de telle sorte que le rapport molaire Al/Si soit compris entre 0,01 et 0.5, de préférence compris entre 0,02 et 0,2. Le coulis ainsi obtenu prend tardivement, tout en évitant de présenter une viscosité trop élevée, néfaste à l'application consolidation et/ou étanchéification des sols ou des matériaux de construction.

On préfère également mettre en oeuvre le composé hydrosoluble à base de calcium et la solution de silicate de métal alcalin de telle sorte que le rapport molaire Ca/Si soit compris entre 0,25 et 1, de préférence compris entre 0,3 et 1.

Pour des raisons pratiques tenant notamment compte de la viscosité du coulis, la teneur en silice dans le coulis est de préférence inférieure ou égale à 30% en poids, de façon encore plus préférentielle inférieure ou égale à 20% en poids.

La teneur minimale en silice n'est pas critique. Toutefois, lorsque le procédé est mis en oeuvre pour la consolidation des sols ou des matériaux de construction, le coulis obtenu, après son injection et son durcissement, doit présenter des propriétés mécaniaues satisfaisantes. Dans ce cas, la teneur minimale en silice est supérieure ou égale à 10%, de préférence supérieure ou égale à 12% en poids.

Selon une variante de l'invention, le procédé est caractérisé en ce qu'il met également en oeuvre de fines particules de silice, telles que notamment de la fumée de silice, de préférence condensée, ou de la silice de précipitation. Cette variante est particulièrement intéressante lorsque l'on veut obtenir un coulis de faible viscosité initiale, tout en présentant après durcissement des propriétés mécaniques satisfaisantes. La quantité de fines particules de silice à ajouter peut donc varier de 0% à une quantité maximale correspondant à une teneur maximale de silice dans le coulis indiquée précédemment, c'est à dire une teneur en silice inférieure, de préférence, à 30%, de manière encore plus préférentielle à 20% (cette teneur correspond alors à la quantité de silice présente dans la solution de silicate de métal alcalin et à celle présente dans les fines particules de silice).

Dans le cas où le procédé décrit ci-dessus est mis en oeuvre pour l'étanchéfication et/ou la consoiidation des sols ou des matériaux de construction, les composants utilisés sont soit injectés séparément dans le matériau à traiter, soit préférentiellement mélanges préalablement pour être ensuite injectés ensemble dans le matériau à injecter. La première variante présente l'inconvénent d'être compliquée dans sa mise en oeuvre, tout en créant des incertitudes sur la qualité du traitement (risque d'une présence hétérogène des constituants dans les interstices).

Les pourcentages, dans ce qui suit et ce qui précède, sont exprimés en poids sauf mention contraire.

Des exemples illustrant les divers aspects de l'invention, sans en limiter sa portée, vont maintenant être donnés.

## Exemples 1 à 6

Dans un bécher, on mélange:
- une solution de silicate de sodium de rapport pondéral Ri ($SiO_2/Na_2O$) = 3,35 et présentant 33 % d'extrait sec.
- une suspension dans l'eau comprenant:
  . de l'aluminate de sodium en poudre commercialisé par la société Carlo Erba® (56% $Al_2O_3$ ; 37 % $NaO_2$),

EP 0 597 735 A1

. de la chaux en poudre commercialisée par Prolabo® (96 % $Ca(OH)_2$, 3 % $CaCO_3$ et de diamètre moyen de 38 μm),
. de la soude.

Les quantités des produits sont telles que l'on obtient une teneur en $SiO_2$ de 15% dans le coulis, un rapport molaire Al/Si de 0,12 et un rapport molaire de Ca/Si de 0,5.

On fait varier la quantité de soude ajoutée, ce qui fait varier le rapport final pondéral Rf ($SiO_2/Na_2O$).

Le tableau suivant rassemble les résultats:

| EXEMPLES | 1 | 2 | 3 | 4 | 5 | 6 comparatif |
|---|---|---|---|---|---|---|
| Q (%) | 3 | 6 | 7 | 10,8 | 12 | 0 |
| Rf | 2,0 | 1,4 | 1,3 | 1,0 | 0,9 | 3,3 |
| Temps de prise (Min.) | < 1 | 8 | > 60 | >> 60 | >> 60 | instantané |

Q représente la quantité de soude ajoutée exprimée en $Na_2O$.

Le temps de prise correspond au temps mis par le coulis ainsi obtenu pour ne plus couler le long de la paroi du becher quand on renverse celui-ci.

Exemples 7 à 12

On procède de la même façon que dans les exemples précédents, dans les conditions suivantes :
teneur finale en $SiO_2$ est de 15 %;
Rf = 1,3;
le rapport molaire Ca/Si est de 0,5.

On fait varier la quantité d'aluminate de sodium dans la suspension (rapport molaire Al/Si varie).

Les résultats sont rassemblés dans le tableau suivant:

| Exemples | 7 | 8 | 9 | 10 | 11 | 12 comparatif |
|---|---|---|---|---|---|---|
| Rapport molaire Al/Si | 0,015 | 0,030 | 0,060 | 0,120 | 0,250 | 0 |
| Temps de prise (Min.) | 10 | 11 | 16 | > 60 | > 60 | 8 |

Exemples 13 à 17

On procède de la même façon que dans les exemples précédents, avec les conditions suivantes :
teneur finale en $SiO_2$ est de 15 % ;
Rf = 0,9.

On fait varier les quantités d'aluminate de sodium et de chaux dans la suspension (rapports molaires Al/Si et Ca/Si varient).

Les résultats sont rassemblés dans le tableau suivant:

| Exemples | 13 | 14 | 15 | 16 | 17 |
|---|---|---|---|---|---|
| Al/Si | 0,12 | 0,12 | 0,12 | 0,25 | 0,25 |
| Ca/Si | 0,12 | 0,25 | 0,50 | 0,12 | 0,50 |
| Viscosité après 3 heures (cp) | 125 | < 220 | 850 | 95 | > 360 |
| Aspect à 20 heures | mou | mou | dur | mou | dur |

La viscosité est mesurée au moyen d'un viscosimètre Brookfield®, série LV, module 1, à température ambiante.

4

Exemples 18 à 30

On procède de la même façon que dans les exemples précédents, dans les conditions suivantes:
le rapport molaire Ca/Si est de 0,5;
le rapport molaire Al/Si est de 0,12.

La chaux utilisée est de la chaux micronisée commercialisée par Balthazard et Cotte ® (94,5 % Ca(OH)2; 3,4 % CaCO3 et de diamètre moyen de 2,9 μm).

On fait varier la teneur en $SiO_2$, ainsi que le rapport final pondéral Rf = $SiO_2/Na_2O$.

Les résultats sont rassemblés dans le tableau suivant:

| Exemples | Teneur en SiO₂(%) | Rf | viscosité à 1 min.(cp) | t (min.) à viscosité 100 cp |
|---|---|---|---|---|
| 18 | 15 | 0,9 | 100 | 1 |
| 19 | 12 | 0,9 | 20 | 45 |
| 20 | 10 | 0,9 | 25 | 3 |
| 21 | 15 | 0,97 | 80 | 3 |
| 22 | 12 | 0,97 | 20 | 10 |
| 23 | 16 | 1,07 | -- | 5 |
| 24 | 15 | 1,07 | 41 | 20 |
| 25 | 12 | 1,07 | 17 | 8 |
| 26 | 10 | 1,07 | -- | 2 |
| 27 | 15 | 1,15 | 40 | 15 |
| 28 | 12 | 1,15 | -- | 5 |
| 29 | 10 | 1,15 | > 100 | 1 |
| 30 | 15 | 1,23 | 50 | 10 |

**Exemples 31 à 36**

On prépare des coulis de la même façon que dans les exemples précédents (utilisation de la chaux micronisée identique à celle des exemples 18 à 30), on les laisse vieillir de 2 à 3 minutes, puis on les introduit dans du sable de Fontainebleau (commercialisé par Prolabo®) dont le diamètre des particules est compris entre 150 et 200 μm, ce sable simulant le sol à traiter. On agite ce mélange. La proportion massique sable/coulis est de 73/27.

Pour évaluer les propriétés mécaniques, ce mélange est ensuite coulé dans une éprouvette (4 cm x 4 cm x 16 cm).

Les mesures de résistance à la compression s'effectuent sur presse Ton Industrie®, à température ambiante. à 7, 14 et 21 jours de vieillissement de l'éprouvette.

Les résultats sont rassemblés dans le tableau suivant:

| Exemples | Teneur SiO$_2$ (%) | Ri | Compression (MPa) | | |
|---|---|---|---|---|---|
| | | | 7 Jours | 14 Jours | 21 Jours |
| 31 | 10 | 1.15 | < 0,3 | < 0,6 | 0,6 |
| 32 | 12 | 1.07 | 0,6 | 0,9 | --- |
| 33 | 15 | 1.07 | 1,6 | 1,9 | --- |
| 34 | 15 | 1.15 | 2,2 | 2,5 | 4,0 |
| 35 | 15 | 1.23 | 1,8 | 2,6 | 2,8 |
| 36 Comparatif | 15 | > 3 | 1,6 | 1,6 | 1,6 |

L'exemple comparatif 36 correspond à un mélange sable/coulis organique préparé de manière analogue à ceux des exemples 31 à 35, la différence réside donc dans le coulis qui est préparé par mélange d'une solution de silicate de sodium de rapport Ri = 3,3 et de diesters D 1000® commercialisés par Rhône-Poulenc® et dont la teneur en SiO$_2$ est de 15 %.

Un test de lixiviation a été effectué sur le "sable injecté" obtenu à partir de l'éprouvette de l'exemple 34, dans les conditions suivantes : volume d'eau non renouvelée égal trois fois la masse de l'échantillon, durée 1 mois.

Le lixiviat possède un pH voisin de 12 et des taux respectifs en silice et en alumine inférieurs à 3000 ppm et 100 ppm. Il est constaté également l'absence d'ions Ca$^{++}$ dans le lixiviat.

## Revendications

**1./** Procédé de préparation d'un coulis, caractérisé en ce qu'il met en oeuvre une solution de silicate de métal alcalin, un composé hydrosoluble à base de calcium, de l'aluminate de métal alcalin et de l'hydroxyde de métal alcalin.

**2./** Procédé selon la revendication 1, caractérisé en ce que le métal alcalin, présent dans les composés mis en oeuvre dans le procédé, est le sodium.

**3./** Procédé selon l'une des revendications précédentes, caractérisé en ce que le composé hydrosoluble à base de calcium est choisi parmi un sel de calcium, du carbonate de calcium, de la chaux ou leur mélange.

**4./** Procédé selon l'une quelconque des revendications précédentes, caractérisé en ce que le composé hydrosoluble à base de calcium est de la chaux micronisée, plus particuiièrement de la chaux dont le diamètre moyen est compris entre 0,5 et 9 um, de préférence entre 1 et 4 µm.

**5./** Procédé selon l'une quelconque des revendications précédentes, caractérisé en ce que l'aluminate de métal alcalin posséde de 35 à 45% en poids de M2O et de 55 à 65% en poids de Al2O3, M représentant un métal alcalin.

**6./** Procédé selon l'une quelconque des revendications précédentes, caractérisé en ce que la solution de silicate de métal alcalin présente un rapport pondéral SiO2/M2O supérieur ou égal à 1,3, de préférence supérieur ou égal à 2, M représentant un métal alcalin.

**7./** Procédé selon l'une quelconque des revendications précédentes, caractérisé en ce que la quantité d'hydroxyde de métal alcalin mise en oeuvre correspond à la quantité necessaire pour que le rapport pondéral SiO2/M2O devienne compris entre 0,9 et 1.3, de préférence compris entre 1,05 et 1,15, M représentant un métal alcalin.

**8./** Procédé selon l'une quelconque des revendications précédentes, caractérisé en ce que la solution de silicate de métal alcalin possède environ 10 à 55% d'extrait sec, de préférence 30 à 50% d'extrait sec.

**9./** Procédé selon l'une quelconque des revendications précédentes, caractérisé en ce que l'aluminate de métal alcalin est ajouté à ladite solution de silicate de métal alcalin et que, simultanément ou après cet ajout, on fait réagir la solution de silicate de métal alcalin avec le composé hydrosoluble à base de calcium, l'hydroxyde de métal alcalin étant ajouté après ou, de préférence, en même temps que le composé hydrosoluble à base de calcium.

**10./** Procédé selon l'une quelconque des revendications précédentes, caractérisé en ce que l'aluminate de métal alcalin, le composé hydrosoluble à base de calcium et l'hydroxyde de métal alcalin sont ajoutés simultanément à la solution de silicate de métal alcalin.

**11./** Procédé selon l'une quelconque des revendications précédentes, caractérisé en ce que la solution de silicate de métal alcalin et l'aluminate de métal alcalin sont mis en oeuvre de telle sorte que le rapport molaire Al/Si soit compris entre 0,01 et 0,5, de préférence compris entre 0,02 et 0,2.

**12./** Procédé selon l'une quelconque des revendications précédentes, caractérisé en ce que le composé hydrosoluble à base de calcium et la solution de silicate de métal alcalin sont mis en oeuvre de telle sorte que le rapport molaire Ca/Si soit compris entre 0,25 et 1, de préférence compris entre 0,3 et 1.

**13./** Procédé selon l'une quelconque des revendications précédentes, caractérisé en ce que la teneur en silice dans le coulis est inférieure ou égale à 30% en poids, de préférence inférieure ou égale à 20% en poids.

**14./** Procédé selon l'une quelconque des revendications précédentes, caractérisé en ce que la teneur en silice est supérieure ou égale à 10%, de préférence supérieure ou égale à 12% en poids.

**15./** Procédé selon l'une quelconque des revendications précédentes, caractérisé en ce qu'il met également en oeuvre de fines particules de silice.

**16./** Coulis, caractérisé en ce qu'il est susceptible d'être obtenu par le procédé selon l'une quelconque des revendications précédentes

**17./** Utilisation du coulis selon la revendication précédente pour l'étanchéification et/ou la consolidation des sols ou des matériaux de construction par injection.

EP 0 597 735 A1

**Office européen des brevets** — **RAPPORT DE RECHERCHE EUROPEENNE**

Numéro de la demande
EP 93 40 2274

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X | PATENT ABSTRACTS OF JAPAN vol. 016, no. 455 (C-987) 22 Septembre 1992 & JP-A-04 159 389 (KYOKADO ENG. CO.) 2 Juin 1992 * abrégé * | 1-4,16 | C04B28/26 C09K17/00 E02D3/12 //(C04B28/26, 18:14,22:00, 22:06,22:10, 40:00) |
| X | CHEMICAL ABSTRACTS, vol. 98, no. 6, 7 Février 1983, Columbus, Ohio, US; abstract no. 39779j, * abrégé * & SU-A-945 130 (LENINGRAD TECHNOLOGICAL INSTITUTE) 23 Juillet 1982 | 1-3 | |
| P,A | DATABASE WPI Week 9329, Derwent Publications Ltd., London, GB; AN 93-232620 & JP-A-05 156 253 (KYOKADO ENG KK) 22 Juin 1993 * abrégé * | 1-3,5-7, 11-17 | |
| A | DATABASE WPI Week 9248, Derwent Publications Ltd., London, GB; AN 92-397132 & SU-A-1 707 138 (YAKUTYA DIAMOND MINING IND. INST.) 23 Janvier 1992 * abrégé * | 1-3 | DOMAINES TECHNIQUES RECHERCHES (Int.Cl.5) C04B |
| A | PATENT ABSTRACTS OF JAPAN vol. 005, no. 156 (C-074) 6 Octobre 1981 & JP-A-56 086 984 (NITTO CHEM IND. CO. LTD) 15 Juillet 1981 * abrégé * | 1,2,16 | |
| D,A | FR-A-2 528 441 (SOLETANCHE) * page 3, ligne 2 - page 4, ligne 29 * | 1-3,16 | |

-/--

| Lieu de la recherche | Date d'achèvement de la recherche | Examinateur |
|---|---|---|
| LA HAYE | 17 Février 1994 | THEODORIDOU, E |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

8

Office européen
des brevets

**RAPPORT DE RECHERCHE EUROPEENNE**

Numero de la demande

EP 93 40 2274

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | CHEMICAL ABSTRACTS, vol. 115, no. 24, 16 Décembre 1991, Columbus, Ohio, US; abstract no. 262085v, * abrégé * & DATABASE WPI Week 9136, Derwent Publications Ltd., London, GB; AN 91-262365 & JP-A-03 170 596 (KYOKADO ENGINEERING CO.) 24 Juillet 1991 * abrégé *<br><br>--- | 1-4,16 | |
| A | CHEMICAL ABSTRACTS, vol. 104, no. 4, 27 Janvier 1986, Columbus, Ohio, US; abstract no. 23478s, * abrégé * & JP-A-60 124 687 (LIGHT KOGYO K.K.) 3 Juillet 1985<br><br>----- | 1-3,6,16 | |
| | | | **DOMAINES TECHNIQUES RECHERCHES (Int.Cl.5)** |

Le présent rapport a été établi pour toutes les revendications

| Lieu de la recherche | Date d'achèvement de la recherche | Examinateur |
|---|---|---|
| LA HAYE | 17 Février 1994 | THEODORIDOU, E |